# EUROPEAN PATENT SPECIFICATION

(11) **EP 4 535 609 B1**
(45) Date of publication and mention of the grant of the patent: **04.03.2026**
(21) Application number: 23201125.4
(22) Date of filing: 02.10.2023
(51) Int. Cl.: H02J 50/00, H01Q 1/22, H01Q 1/24, H02J 50/20

(54) **ENERGY HARVESTING SYSTEM FOR A CONVEYOR**
ENERGIEGEWINNUNGSSYSTEM FÜR EINEN FÖRDERER
SYSTÈME DE COLLECTE D'ÉNERGIE POUR UN TRANSPORTEUR

(43) Date of publication of application: 09.04.2025
(73) Proprietor: Valstybinis moksliniu tyrimu institutas Fiziniu ir technologijos mokslu centras, 10257 Vilnius (LT)
(72) Inventor: Simniskis, Rimantas, Vilnius (LT); Kancleris, Zilvinas Andrius, Vilnius (LT); Ragulis, Paulius, Vilnius (LT); Zemgulyte, Justina, Vilnius (LT); Slekas, Gediminas, Vilnius (LT); Trusovas, Romualdas, Vilnius (LT); Ratautas, Karolis, Vilnius (LT)
(74) Representative: Pakeniene, Ausra

(56) References cited:
- US-A1- 2012 217 132
- US-A1- 2023 174 314
- US-B1- 6 356 201

## Description

### TECHNICAL FIELD

The invention relates to a system for radio frequency-based energy harvesting using antennas and radio frequency source, more specifically to energy harvesting systems comprising antennas and radio frequency source for providing energy for wireless sensor nodes integrated into industrial belts of foodstuff production conveyors.

### BACKGROUND ART

A wide variety of electronic products has recently been oriented to the Internet of Things trend. As a rule, they use wireless technology and units autonomously communicating in complex systems. Control of hygienic norms on production conveyor belt surfaces in the food industry is one of the typical applications of the aforementioned technology. Electronic wireless sensors and components of supporting circuitry for a conveyor moving belt surface condition monitoring are usually mounted on top of such belts. The electronic circuitry of wireless sensors in a conveyor moving belt needs a power supply from autonomous energy sources. In many cases, the use of power supply, such as simple or rechargeable batteries for sensors, is inconvenient and tedious. A conveyor belt needs to be stopped to change or recharge batteries, during which the ongoing technological process on the conveyor belt has to be interrupted. It results in production losses, service operations, and time consumption. Common solutions for powering electrical devices in such applications include solar, thermal, and vibrational energy sources.

Energy supplied by harvesting radio frequency (RF) energy is a promising alternative. Commonly, RF-based energy is radiated by mobile communication networks, Wi-Fi routers, or other wireless data hubs, which are widely available in most industrial sites.

In the international patent application, publication No.: WO2015019106 an RF energy harvester is disclosed. The harvester is used in stationary systems where an antenna is a 3D structure. The distance between the RF radiator and the metal ground plane is λ/4.8, where λ is the wavelength of the RF source. In the case of standard Wi-Fi 2.45 GHz frequency, λ/4.8 is 25 mm. The disclosed antenna is not suitable for application in relatively thin and flexible belts of industrial conveyors.

In India patent application No.: IN 201941033657 a combination of an antenna and solar cell for energy harvesting and electric energy supply for wearable electronic systems integrated into wearable accessories and clothing is disclosed. Main shortcoming of such antenna is low gain - below 4.5 dB.

In India patent application No.: IN 202141044585 a graphene based screen printed antenna on flexible substrates for wireless energy harvesting applications is disclosed". The antenna is characterized by gain up to 2.3 dB on 2.42 GHz frequency, where typically Wi-Fi data hubs are operating. Main disadvantage of the disclosed antenna is low gain.

In the publication C. Fowler, S. Silva, G. Thapa, and J. Zhou in paper "High efficiency ambient RF energy harvesting by a metamaterial perfect absorber" in Optical Express, Vol 12, No 3/1 Mar 2022, pp.1242-1250, it is disclosed that a reflecting ground plane can improve the energy harvesting of flat metamaterial structure by factor 16, but the thickness of the antenna at a maximum gain should be 40 mm, that is not acceptable for belt type conveyor application.

US 2012/217132 A1, US 6 356 201 B1 and US 2023/174314 A1 are further prior art documents each disclosing RFIDs integrated in conveyor belts.

The present invention is dedicated to overcoming of the above shortcomings and for producing further advantages over prior art.

### BRIEF DESCRIPTION OF THE INVENTION

The invention discloses a system for RF energy harvesting for a conveyor. The system comprises an RF wave source, a conveyor belt comprising a flexible thin antenna integrated into the conveyor belt, and wireless sensors and supporting electronic circuitry comprising electronic components for energy accumulation and transmission to the sensors. The system also comprises an RF wave stationary reflector. Power to the wireless sensors is provided wirelessly in a moving or stationary conveyor belt.

As data from the wireless sensors is transmitted to a wireless data acquisition hub through wireless communication, RF energy radiated from such data acquisition hub is harvested by electronic components integrated into the conveyor belt for feeding the sensors. The stationary reflector is mounted at a certain distance beneath the non-metallic conveyor belt. The combination of the flexible flat antenna integrated into the conveyor belt and the metal reflector increases antenna gain, it improves energy harvesting and data transmission. The harvested energy is increased, and the amount of energy required for data transmission from conveyor sensors to the data hub is decreased. The proposed system increases the effectiveness of the antenna on the conveyor for energy harvesting up to 5 times.

### BRIEF DESCRIPTION OF THE DRAWINGS

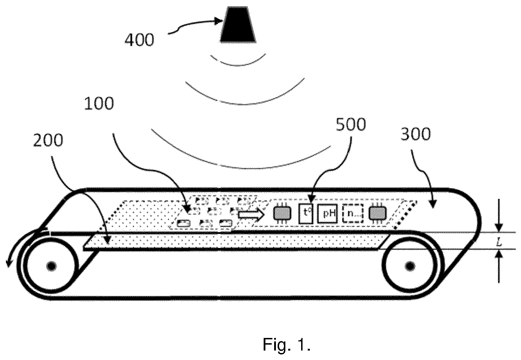

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings Fig 1.

Fig. 1 shows a system comprising an RF based data hub, a flexible harvesting antenna integrated into a conveyor belt, a stationary reflector, conveyor belt wireless sensors, and electronic components for energy accumulation and transmission to the sensors according to the invention.

Preferred embodiments of the invention will be described herein below with reference to the drawings. Each figure contains the same numbering for the same or equivalent element.

### DETAILED DESCRIPTION OF THE INVENTION

It should be understood that numerous specific details are presented in order to provide a complete and comprehensible description of the invention embodiment. However, the person skilled in the art will understand that the embodiment examples do not limit the application of the invention which can be implemented without these specific instructions. Well-known methods, procedures, and components have not been described in detail for the embodiment to avoid misleading. Furthermore, this description should not be considered to be constraining the invention to given embodiment examples but only as one of the possible implementations of the invention.

According to the invention, an energy harvesting system for a conveyor comprises a conveyor belt (300) comprising at least one thin and flexible energy harvesting antenna (100) integrated into the conveyor belt (300) together with wireless sensors and supporting electronic circuitry (500) comprising electronic components for energy accumulation and transmission to the wireless sensors. The system further comprises a stationary RF wave reflector (200), and RF waves-based data hub (400).

The thin and flexible energy harvesting antenna (100) is essentially a 2D flexible antenna (100) due to its low/thin profile. The thin and flexible energy-harvesting antenna (100) together with the electronic components for energy accumulation and transmission to the sensors are integrated into the conveyor belt (300) in such a way that the thin and flexible energy harvesting antenna (100) and supporting electronic circuitry (500) would be separated from the outer surface of the conveyor belt (300) by a layer of conveyor belt material serving as a protective layer from products being transported on the surface of the conveyor belt, and also in such a way that the thin and flexible energy harvesting antenna (100) and the supporting electronic circuitry (500) would be entirely enclosed by the conveyor belt (300) for protecting the thin and flexible energy harvesting antenna (100) and the supporting electronic circuitry (500) from environmental impact.

The stationary reflector (200) is disposed below the conveyor belt (300) so that the receiving antenna (100) would be positioned between the stationary reflector (200) and the RF-based data hub (400), at least once per single turn of the conveyor belt (300).

In another instance of positioning of the supporting electronic circuitry (500), the supporting electronic circuitry (500) is mounted on surface of the conveyor belt (300).

The thin and flexible energy harvesting antenna (100) comprises a sheet of essentially 2D and flexible dielectric material e.g., polyimide, Teflon, or other flexible dielectric laminate on which elements of an array of RF harvesting cells, constituting the thin and flexible energy harvesting antenna (100), are deposited. The elements of the array of RF harvesting cells comprises split rings, dipoles, loops, etc., or other 2D patterns with rectifiers and capacitors storing RF energy.

The data collection hub (400) is a device such as a Wi-Fi router, Zig-Bee, Bluetooth, or other wireless communication transceiver operating on 2.45 GHz, 5 GHz, etc., or other RF frequencies. The data collection hub (400) is mounted above the conveyor belt (300). The RF energy, radiated by the data hub (400) is received by the array of RF energy harvesting cells of the thin and flexible energy harvesting antenna (100).

The stationary reflector (200) is disposed beneath the conveyor belt (300) so that the thin and flexible energy harvesting antenna (100), the sensors and the supporting electronic circuitry (500) would move between the data hub (400) and the reflector (200) when the conveyor is moving. The stationary reflector (200) is mounted at a distance of L providing a maximum gain of the flexible antenna (100) at a frequency at which communication with the data hub (400) is established. The distance L between the movable and stationary parts of the antenna must be slightly tuned depending on the permittivity of the conveyor belt and on the topology of the thin and flexible energy harvesting antenna's (100) metallic parts.

Therefore, either additional investigation of the used antenna should be performed beforehand, or the position of the reflector must be adjusted on site.

Regular gain of 2D flat flexible antennas of different configurations such as patch, F-shape, slotted, etc. antennas results in low efficiency of energy harvesters. The stationary reflector (200) boosts the gain and efficiency of the thin and flexible energy harvesting antenna (100) by a factor of up to 5. As a result, enough RF energy is harvested to supply the wireless sensors and supporting electronics (500) when employing the thin and flexible energy harvesting antenna (100) on the moving conveyor belt (300) with the stationary reflector (200).

Although numerous characteristics and advantages together with structural details and features have been listed in the present description of the invention, the description is provided as an example fulfilment of the invention. Without departing from the principles of the invention, there may be changes in the details, especially in the form, size, and layout, in accordance with the most widely understood meanings of the concepts and definitions used in claims.

## Claims

1. Energy harvesting system for a conveyor comprising a conveyor belt, the energy harvesting system comprising a RF energy source, at least one energy harvesting antenna for receiving the RF based wave and a conveyor belt (300) comprising
a thin and flexible energy harvesting antenna (100) integrated into the conveyor belt (300) together with wireless sensors and supporting electronic circuitry (500) comprising electronic components for energy accumulation and transmission to the wireless sensors;
a stationary RF waves reflector (200); and
a RF data hub (400) for radiating RF waves;
where the thin and flexible energy harvesting antenna (100) is essentially a 2D flexible antenna (100) comprising an array of RF harvesting cells for collective RF waves energy from the data hub (400);
where the stationary reflector (200) is disposed below the conveyor belt (300) so that the harvesting antenna (100) would be positioned between the stationary reflector (200) and the RF based data hub (400) at least once per conveyor belt (300) revolution.

2. Energy harvesting system according to claim 1, where the thin and flexible energy harvesting antenna (100) together with the electronic components for energy accumulation and transmission to the sensors are integrated into the conveyor belt (300) where the thin and flexible energy harvesting antenna (100) and supporting electronic circuitry (500) are separated from outer surface of the conveyor belt (300) by a layer of conveyor belt material and the thin and flexible energy harvesting antenna (100) and supporting electronic circuitry (500) are entirely enclosed by the conveyor belt (300).

3. Energy harvesting system according to claim 1 or 2, where the thin and flexible energy harvesting antenna (100) comprises a sheet of essentially 2D and flexible dielectric material, such as polyimide, Teflon, or other flexible dielectric laminate on which elements of the array of RF energy harvesting cells are deposited.

4. Energy harvesting system according to any one of claims 1-3, where the elements of the array of RF energy harvesting cells comprise split rings, dipoles, loops, or other 2D patterns with rectifiers and capacitors storing RF energy.

5. Energy harvesting system according to any one of previous claims, where the data collection hub (400) is a device such as a Wi-Fi router, Zig-Bee, Bluetooth, or other wireless communication transceiver operating on 2.45 GHz, 5 GHz, or other RF frequencies.

6. Energy harvesting system according to any one of the previous claims, where the stationary reflector (200) is mounted at a distance of L providing a maximum gain of the flexible antenna (100) at a frequency at which communication with the data hub (400) is established.

## Patentansprüche

1. Energiegewinnungssystem für einen Förderer, der ein Förderband umfasst, wobei das Energiegewinnungssystem eine RF-Energiequelle, mindestens eine Energiegewinnungsantenne zum Empfangen der RF-basierten Welle und ein Förderband (300) umfasst, das eine dünne und flexible Energiegewinnungsantenne (100) umfasst, die zusammen mit drahtlosen Sensoren und einer unterstützenden elektronischen Schaltung (500), die elektronische Komponenten zur Energieakkumulation und Übertragung an die drahtlosen Sensoren umfasst, in das Förderband (300) integriert ist;
einen stationären RF-Wellenreflektor (200); und
einen RF-Daten-Hub (400) zum Abstrahlen von RF-Wellen;
wobei die dünne und flexible Energiegewinnungsantenne (100) im Wesentlichen eine flexible 2D-Antenne (100) ist, die eine Anordnung von RF-Gewinnungszellen für kollektive RF-Wellenenergie von dem Daten-Hub (400) umfasst;
wobei der stationäre Reflektor (200) unterhalb des Förderbands (300) angeordnet ist, so dass die Gewinnungsantenne (100) mindestens einmal pro Umdrehung des Förderbands (300) zwischen dem stationären Reflektor (200) und dem RF-basierten Daten-Hub (400) positioniert wäre.

2. Energiegewinnungssystem nach Anspruch 1, wobei die dünne und flexible Energiegewinnungsantenne (100) zusammen mit den elektronischen Komponenten zur Energieakkumulation und Übertragung an die Sensoren in das Förderband (300) integriert sind, wobei die dünne und flexible Energiegewinnungsantenne (100) und die unterstützende elektronische Schaltung (500) von äußeren Oberfläche des Förderbands (300) durch eine Schicht Förderbandmaterial getrennt sind und die dünne und flexible Energiegewinnungsantenne (100) und die unterstützende elektronische Schaltung (500) vollständig durch das Förderband (300) umschlossen sind.

3. Energiegewinnungssystem nach Anspruch 1 oder 2, wobei die dünne und flexible Energiegewinnungsantenne (100) eine Platte aus im Wesentlichen 2D und flexiblem dielektrischen Material umfasst, wie etwa Polyimid, Teflon oder andere flexible dielektrische Laminate, auf denen Elemente der Anordnung von RF-Energiegewinnungszellen aufgebracht sind.

4. Energiegewinnungssystem nach einem der Ansprüche 1-3, wobei die Elemente der Anordnung von RF-Energiegewinnungszellen Spaltringe, Dipole, Ringe oder andere 2D-Muster mit Gleichrichtern und Kondensatoren, die RF-Energie speichern, umfassen.

5. Energiegewinnungssystem nach einem von vorhergehenden Ansprüchen, wobei der Datenerfassungs-Hub (400) eine Vorrichtung wie etwa ein WLAN-Router, Zig-Bee, Bluetooth oder ein anderer drahtloser Kommunikationssendeempfänger ist, der auf Frequenzen von 2,45 GHz, 5 GHz oder anderen RF-Frequenzen arbeitet.

6. Energiegewinnungssystem nach einem der vorhergehenden Ansprüche, wobei der stationäre Reflektor (200) in einem Abstand L montiert ist, der eine maximale Verstärkung der flexiblen Antenne (100) bei einer Frequenz, bei der eine Kommunikation mit dem Daten-Hub (400) hergestellt ist, bereitstellt.

## Revendications

1. Système de récupération d'énergie pour un convoyeur comprenant une bande transporteuse, le système de récupération d'énergie
comprenant une source d'énergie RF, au moins une antenne de récupération d'énergie pour recevoir l'onde à base de RF et une bande transporteuse (300) comprenant
une antenne de récupération d'énergie mince et flexible (100) intégrée dans la bande transporteuse (300) conjointement avec des capteurs sans fil et un circuit électronique de support (500) comprenant des composants électroniques pour l'accumulation d'énergie et la transmission vers les capteurs sans fil ;
un réflecteur d'ondes RF stationnaire (200) ; et
un concentrateur de données RF (400) pour émettre des ondes RF ; dans lequel l'antenne de récupération d'énergie mince et flexible (100) est essentiellement une antenne flexible en 2D (100) comprenant un réseau de cellules de récupération RF pour la collecte d'énergie des ondes RF provenant du concentrateur de données (400) ;
dans lequel le réflecteur stationnaire (200) est disposé sous la bande transporteuse (300) de sorte que l'antenne de récupération (100) se trouve positionnée entre le réflecteur stationnaire (200) et le concentrateur de données à base de RF (400) au moins une fois par révolution de la bande transporteuse (300).

2. Système de récupération d'énergie selon la revendication 1, dans lequel l'antenne de récupération d'énergie mince et flexible (100) conjointement avec les composants électroniques pour l'accumulation d'énergie et la transmission vers les capteurs sont intégrés dans la bande transporteuse (300), où l'antenne de récupération d'énergie mince et flexible (100) et le circuit électronique de support (500) sont séparés de la surface externe de la bande transporteuse (300) par une couche de matériau de bande transporteuse, et l'antenne de récupération d'énergie mince et flexible (100) ainsi que le circuit électronique de support (500) sont entièrement enfermés par la bande transporteuse (300).

3. Système de récupération d'énergie selon la revendication 1 ou 2, dans lequel l'antenne de récupération d'énergie mince et flexible (100) comprend une feuille de matériau diélectrique essentiellement en 2D et flexible, tel que le polyimide, le Téflon ou un autre stratifié diélectrique flexible sur lequel des éléments du réseau de cellules de récupération d'énergie RF sont déposés.

4. Système de récupération d'énergie selon l'une quelconque des revendications 1 à 3, dans lequel les éléments du réseau de cellules de récupération d'énergie RF comprennent des anneaux fendus, des dipôles, des boucles ou d'autres motifs en 2D avec des redresseurs et des condensateurs stockant l'énergie RF.

5. Système de récupération d'énergie selon l'une quelconque des revendications précédentes, dans lequel le concentrateur de collecte de données (400) est un dispositif tel qu'un routeur Wi-Fi, Zig-Bee, Bluetooth ou un autre émetteur-récepteur de communication sans fil fonctionnant sur 2,45 GHz, 5 GHz ou d'autres fréquences RF.

6. Système de récupération d'énergie selon l'une quelconque des revendications précédentes, dans lequel le réflecteur stationnaire (200) est monté à une distance L fournissant un gain maximal de l'antenne flexible (100) à une fréquence à laquelle la communication avec le concentrateur de données (400) est établie.
